(19) Europäisches Patentamt

European Patent Office

Office européen des brevets

(11) EP 4 749 291 A1

(12) **EUROPEAN PATENT APPLICATION**
published in accordance with Art. 153(4) EPC

(43) Date of publication:
27.05.2026 Bulletin 2026/22

(51) International Patent Classification (IPC):
G01N 35/00 (2006.01)   G01J 3/02 (2006.01)
G01J 3/18 (2006.01)

(21) Application number: 24842844.3

(22) Date of filing: 06.06.2024

(52) Cooperative Patent Classification (CPC):
G01J 3/02; G01J 3/18; G01N 35/00

(86) International application number:
PCT/JP2024/020779

(87) International publication number:
WO 2025/018048 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2023 JP 2023116545

(71) Applicant: HITACHI HIGH-TECH CORPORATION
Tokyo 105-6409 (JP)

(72) Inventors:
• FUNAKOSHI, Sunao
Tokyo 100-8280 (JP)
• OKUSA, Takenori
Tokyo 105-6409 (JP)
• ISOSHIMA, Nobuyuki
Tokyo 105-6409 (JP)
• YOKOYAMA, Koki
Tokyo 105-6409 (JP)

(74) Representative: Strehl & Partner mbB
Maximilianstrasse 54
80538 München (DE)

(54) **AUTOMATIC ANALYSIS DEVICE**

(57)   In an automatic analyzer, it is possible to start analysis of a sample with high accuracy in a short time by stabilizing the temperature of a light detection element or a diffraction grating in a short time. The present disclosure proposes an automatic analyzer including: a light source that applies light to a reaction container in which a sample and a reagent are mixed and reacted; a spectroscopic element that disperses light transmitted through the reaction container; a light detection element that detects light dispersed by the spectroscopic element; a fixing member that fixes the light detection element and the spectroscopic element; a measurement chamber that accommodates the spectroscopic element and the light detection element; a heating device installed on the fixing member; a controller that controls the heating device; a temperature sensor support member installed on the fixing member on an inner side of the measurement chamber adjacent to the light detection element; and a measurement chamber internal temperature sensor installed in the temperature sensor support member, in which a thermal time constant from the heating device to the light detection element is in a range of 80% to 120% of a thermal time constant from the heating device to the measurement chamber internal temperature sensor, and the controller controls the heating device such that a temperature detected by the measurement chamber internal temperature sensor becomes a predetermined temperature (see FIG. 2).

FIG. 2

EP 4 749 291 A1

**Description**

Technical Field

The present disclosure relates to an automatic analyzer.

Background Art

The automatic analyzer performs pipetting of a specimen solution containing a substance to be analyzed and a reaction reagent into a reaction container to cause the specimen solution and the reaction reagent to react with each other, and optically measures the reaction liquid to perform analysis. For example, there is an automatic analyzer for detecting a specific biological component, a chemical substance, or the like contained in a sample using blood, serum, urine, or the like as the sample. An analysis method by an automatic analyzer includes a step applying light to a sample and measuring absorbance or the like of the sample. In an analysis method including such steps, temperature fluctuation of a light detection element such as a photodiode which is an element for detecting light and a diffraction grating for dispersing light greatly affects measurement accuracy. Therefore, it is desirable to minimize temperature fluctuation of the light detection element and the diffraction grating. In addition, in order to start the measurement early, it is desirable to stabilize the temperatures of the light detection element and the diffraction grating as soon as possible at the time of starting the apparatus.

Conventionally, as disclosed in PTL 1, there is known a spectrophotometer including a spectroscopic chamber that is separated from a light source chamber with a heat insulating section located therebetween, and includes at least a spectroscopic element, a sample chamber, and a detector, a temperature measuring means for measuring the temperature inside of the spectroscopic chamber, a temperature regulating means for heating and/or cooling the inside of the spectroscopic chamber, and a controlling means for acquiring temperature information from the temperature measuring means and controlling the temperature regulating means to operate so as to keep the inside of the spectroscopic chamber at a predetermined preset temperature.

Citation List

Patent Literature

PTL 1: JP 2014-48176 A

Summary of Invention

Technical Problem

However, in the conventional technique as disclosed in PTL 1, for example, in a case where the temperature regulating means is a heater, the temperature measured by the temperature measuring means may rise very quickly, particularly compared to the temperature of the light detection element. For this reason, there is a problem that the output of the heater is suppressed even though the temperature of the light detection element is not sufficiently stable in practice, causing the stability of the temperatures of the light detection element and the diffraction grating to be delayed. In addition, conversely, since the temperature detected by the temperature measuring means rises slowly compared to the temperature of the light detection element, a state in which the output of the heater is large is maintained even though the temperature of the light detection element has actually reached the set value, and the temperature of the light detection element rises too much, so that a problem that the temperature stability is delayed may occur. As described above, the related art has the issue of how quickly the temperatures of the light detection element and the diffraction grating are stabilized.

In view of such a situation, the present disclosure proposes an improvement idea of an automatic analyzer that enables analysis of a sample with high accuracy to be started in a short time by quickly stabilizing the temperature of a light detection element or a diffraction grating.

Solution to Problem

To solve the above problem, the present disclosure proposes an automatic analyzer including: a light source that applies light to a reaction container in which a sample and a reagent are mixed and reacted; a spectroscopic element that disperses light transmitted through the reaction container; a light detection element that detects light dispersed by the spectroscopic element; a fixing member that fixes the light detection element and the spectroscopic element; a measurement chamber that accommodates the spectroscopic element and the light detection element; a heating device installed on the fixing member; a controller that controls the heating device; a temperature sensor support member installed on the fixing member on an inner side of the measurement chamber adjacent to the light detection element; and a measurement chamber internal temperature sensor installed in the temperature sensor support member, in which a thermal time constant from the heating device to the light detection element is in a range of 80% to 120% of a thermal time constant from the heating device to the measurement chamber internal temperature sensor, and the controller controls the heating device such that a temperature detected by the measurement chamber internal temperature sensor becomes a predetermined temperature.

Further features related to the present disclosure will become apparent from the description of the present specification and the accompanying drawings. Aspects of the present disclosure are achieved and realized by elements, combinations of various elements, and aspects of the following detailed description and appended claims.

The description herein is merely exemplary and is not intended to limit the scope of the claims or application examples of the present disclosure in any manner.

Advantageous Effects of Invention

According to the technology of the present disclosure, since the temperatures of the light detection element and the diffraction grating can be quickly stabilized, it is possible to start analysis of a sample with high accuracy in a short time.

Brief Description of Drawings

[FIG. 1] FIG. 1 is a diagram illustrating a configuration example of an automatic analyzer 100 according to a first embodiment as viewed from directly above.

[FIG. 2] FIG. 2 is a diagram illustrating a configuration example of a side surface of the automatic analyzer 100 according to the first embodiment as viewed from the direction of the arrow in FIG. 1.

[FIG. 3] FIG. 3 is a diagram illustrating an example of a method for fixing a thermistor 3 of the automatic analyzer 100 according to the present embodiment.

[FIG. 4] FIG. 4 is a diagram illustrating an attachment structure (direct attachment) of the thermistor 3 to a block 4 according to a conventional structure as a comparative example.

[FIG. 5A] FIG. 5A is a diagram showing a simulation result of temperature changes of a light detection element 2, the thermistor 3, and the block 4 in the vicinity of a heater 5 in the structure of FIG. 4 when the ambient environment temperature is low.

[FIG. 5B] FIG. 5B is a diagram illustrating a simulation result of heater output.

[FIG. 6A] FIG. 6A is a diagram showing a simulation result of temperature changes of the light detection element 2, the thermistor 3, and the block 4 in the vicinity of the heater 5 by a method for installing the thermistor 3 according to the first embodiment (FIGS. 1 to 3).

[FIG. 6B] FIG. 6B is a diagram illustrating a simulation result of heater output.

[FIG. 7] FIG. 7 is a diagram showing a relationship between an ambient environment temperature detected by an ambient environment temperature sensor 17 and a target temperature of the thermistor 3.

[FIG. 8] FIG. 8 is a diagram (diagram corresponding to FIG. 2) illustrating a configuration example of an automatic analyzer 100 according to a second embodiment.

Description of Embodiments

Embodiments of the present disclosure relate to, for example, an automatic analyzer for clinical use that analyzes a sample derived from a living body. More specifically, the present embodiment relates to an automatic analyzer configured such that a thermal time constant $\tau 1$ from a heater to a light detection element is in the range of 80% to 120% of a thermal time constant $\tau 2$ from the heater to the thermistor, and capable of quickly stabilizing the temperature of the light detection element by controlling a heating device such that the temperature detected by the thermistor becomes a predetermined temperature.

Hereinafter, embodiments of the present disclosure will be described with reference to the accompanying drawings. In the accompanying drawings, functionally same elements may be denoted by the same numbers. Note that, although the accompanying drawings illustrate specific embodiments and implementation examples conforming to the principles of the present disclosure, these are for understanding the present disclosure and are not used to interpret the present disclosure in a limited manner.

In the present embodiment, the description is made in sufficient detail for those skilled in the art to implement the present disclosure, but it is necessary to understand that other implementations and embodiments are possible, and changes in configurations and structures and replacement of various elements are possible without departing from the scope and spirit of the technical idea of the present disclosure. Therefore, the following description should not be interpreted as being limited thereto.

(1) First Embodiment

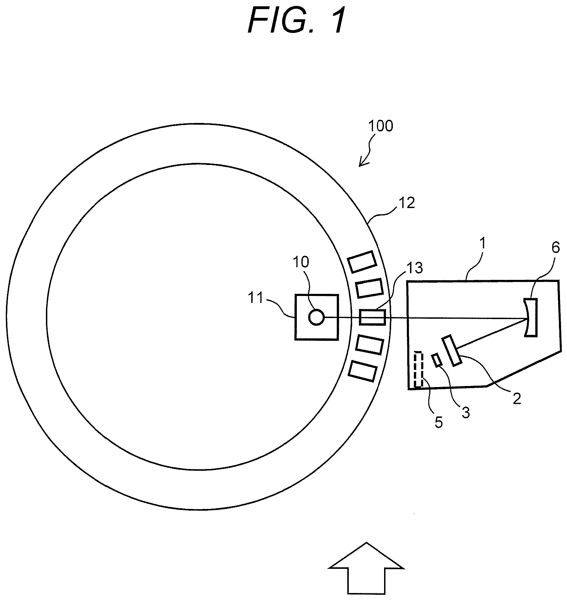

An automatic analyzer according to a first embodiment will be described with reference to FIGS. 1 to 7.

<Configuration Example of Automatic Analyzer>

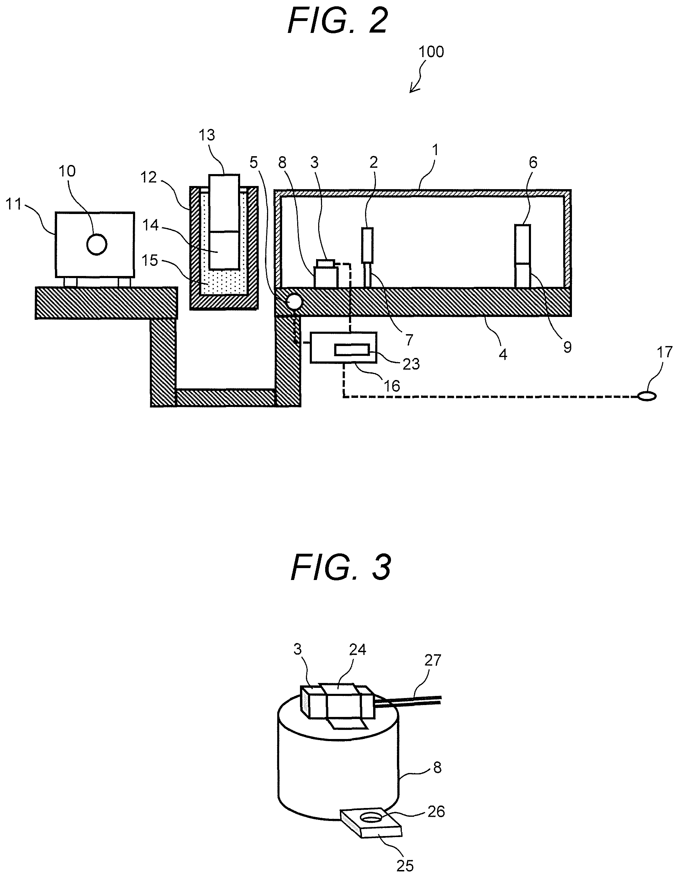

FIGS. 1 and 2 are diagrams illustrating an internal configuration example of an automatic analyzer 100 according to the present embodiment. FIG. 1 is a diagram illustrating a configuration example of the automatic analyzer 100 as viewed from directly above (the internal configuration of a measurement chamber 1 is illustrated). FIG. 2 is a diagram illustrating a configuration example of a side surface of the automatic analyzer 100 as viewed from the direction of the arrow in FIG. 1 (the internal configuration of the measurement chamber 1 is illustrated).

In FIGS. 1 and 2, the automatic analyzer includes a measurement chamber 1 that accommodates a light detection element 2, a thermistor 3 that is a temperature sensor, a heater 5, a diffraction grating 6 that is a spectroscopic element, a light detection element support member 7, a thermistor support member 8, and a diffraction grating support member 9, a light source 10, a light source chamber 11 in which the light source 10 is disposed, a reaction disk 12 that accommodates constant temperature water 15 and causes a sample to react with a reagent, a reaction container 13 that accommodates a reaction liquid (solution in which the sample and the reagent react) 14, a controller 16, an ambient environment temperature sensor 17, and a block 4 (fixing member) of metal or the like on which the measurement chamber 1 and the light source chamber 11 are placed.

The reaction disk 12 is filled with constant temperature water 15, and a plurality of (a large number of) reaction containers 13 are installed.

The light source 10 includes a halogen lamp, an LED lamp, or the like, and is installed in the light source chamber 11. The light source chamber 11 is fixed to the block 4.

By rotating the reaction disk 12, the plurality of reaction containers 13 can be sequentially measured. A sample and a reagent are placed in the reaction container 13 to produce a reaction liquid 14. The light emitted from the light source 10 is applied to the reaction liquid 14 in the reaction container 13. The light transmitted through the reaction liquid 14 enters the measurement chamber 1 through a light transmission window (not illustrated) provided in the measurement chamber 1. This light is incident on the diffraction grating 6, dispersed, and detected by the light detection element 2 such as a photodiode array.

The measurement chamber 1 has a structure (light shielding structure) in which light from the outside does not enter due to the block 4 and a cover covering an upper portion thereof. The light detection element 2 and the diffraction grating 6 provided in the measurement chamber 1 are fixed to the block 4 through the support members 7 and 9, respectively. In addition, in order to facilitate adjustment of the optical system, the light source chamber 11, the light detection element 2, and the diffraction grating 6 may be fixed to a common block 4. In the block 4, a portion for fixing the light source chamber 11 and a portion for fixing a member installed in the measurement chamber 1 may be integrally formed, or individual portions (formed of the same material) may be connected to each other. In each case, the block 4 is configured as a continuous fixing member so that heat is uniformly transferred.

The heater 5 is installed in the block 4. The heater 5 is provided to quickly stabilize the temperatures of the light detection element 2 and the diffraction grating 6. The heater 5 is inserted into the block 4 by opening a hole, for example, and is fixed with a screw. When heat conductive grease is applied between the heater 5 and the block 4, the heater 5 can be easily inserted into the block 4. In addition, the thermistor 3 fixed to the thermistor support member 8 is installed on the block 4 and inside the measurement chamber 1. That is, the thermistor 3 is not installed in direct contact with the block 4, but is installed through the thermistor support member 8.

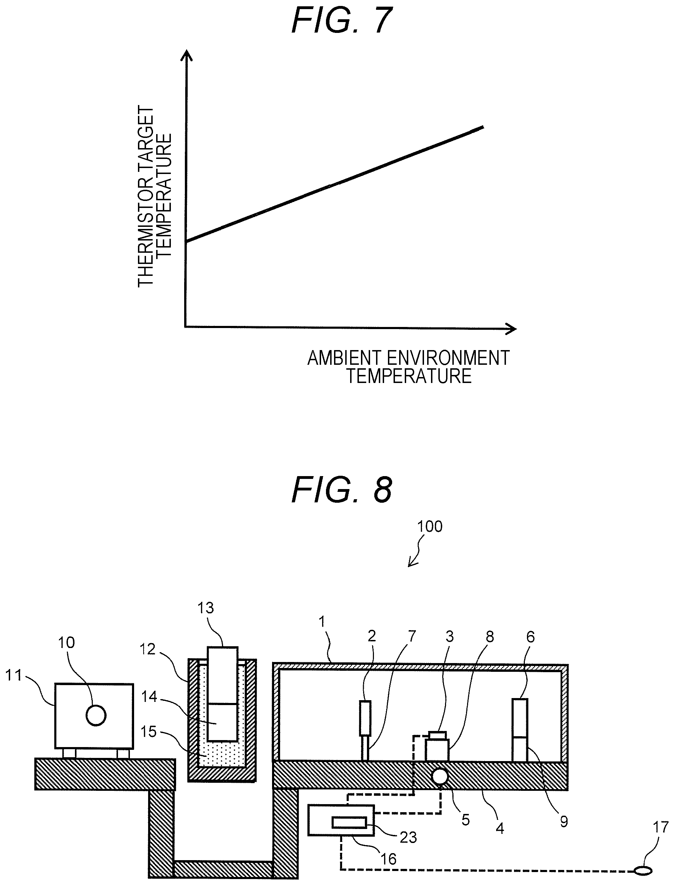

The controller 16 controls the output of the heater 5 such that the temperature detected by the thermistor 3 becomes a predetermined temperature. When the heat from the heater 5 is transferred to the light detection element 2 and the diffraction grating 6 earlier, the temperatures of the light detection element 2 and the diffraction grating 6 can be stabilized earlier. As such, the block 4 that conducts heat by thermal conduction can be made of a material having a high thermal conductivity such as aluminum. The controller 16 sets the target temperature of the thermistor 3 based on the ambient environment temperature around the apparatus detected by the ambient environment temperature sensor 17 (see FIG. 7 for details).

In particular, in order to quickly stabilize the temperature of the light detection element 2 whose temperature easily affects the measurement accuracy, the temperature of the light detection element 2 and the temperature detected by the thermistor 3 are preferably as close as possible. Therefore, it is conceivable to directly install the thermistor 3 on the substrate of the light detection element 2, but it is not preferable to directly install the thermistor 3 on the substrate of the light detection element 2 in consideration of the installation space, the influence of noise, and the influence of heat generation of the thermistor 3 itself. Therefore, in order to bring the temperature of the light detection element 2 and the temperature detected by the thermistor 3 as close as possible, the thermal time constant $\tau 1$ from the heater 5 to the light detection element 2 (time required to change to the target temperature) and the thermal time constant $\tau 2$ from the heater 5 to the thermistor 3 may be set to be within a predetermined range (for example, $\tau 1$ ranges from 80% to 120% of $\tau 2$), or more preferably substantially equal. These thermal time constants $\tau 1$ and $\tau 2$ are determined by the thermal resistance and heat capacity of each member and the amount of heat dissipated from each member to air. By adjusting the material and size of the support member (installation member) 8 of the thermistor 3, the relationship between the thermal time constants $\tau 1$ and $\tau 2$ of the thermistor 3 and the support member 8 can be set within the above range or substantially equal to each other. As a material of the thermistor support member 8, a resin member or the like having a lower thermal conductivity than the block 4 can be used. Examples of such a material include polyacetal, polycarbonate, and polyphenylene ether.

<Method for Fixing Thermistor 3>

FIG. 3 is a diagram illustrating an example of a method for fixing the thermistor 3. The thermistor 3 is fixed to an upper portion of the resin thermistor support member 8 by a thermistor fixture 24. The thermistor support member 8 is fixed to the block 4 by a joint portion 25 provided at the base thereof. For example, the thermistor support member 8 can be fixed by screw-clamping a screw hole (not illustrated) provided in the block 4 and the joint portion 25 with a bolt inserted into a screw hole 26. A plurality of joint portions 25 may be provided around the thermistor support member 8. Reference numeral 27 denotes thermistor wiring.

<Thermistor according to Comparative Example>

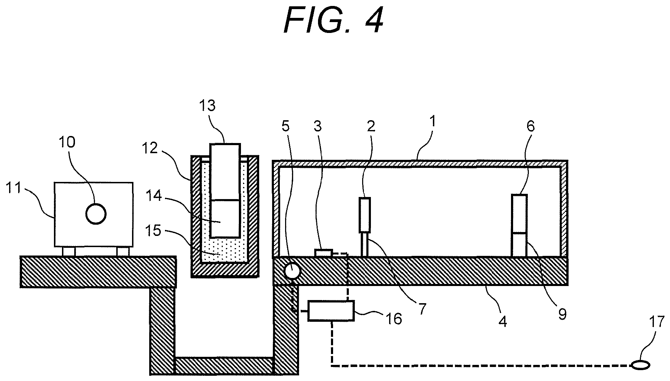

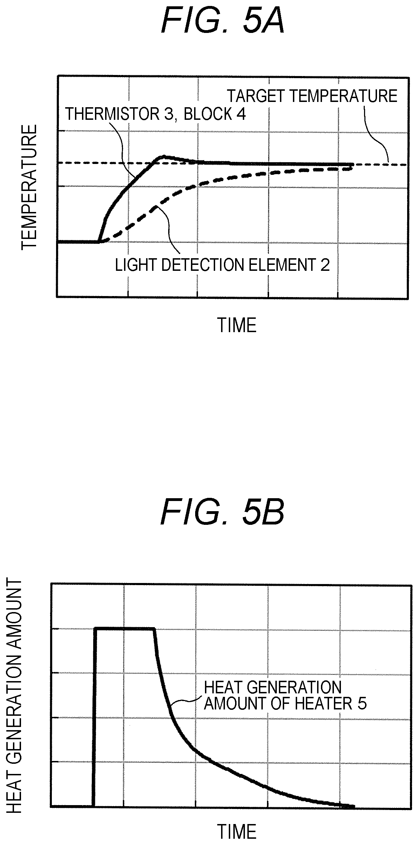

A comparative example will be described with reference to FIGS. 4, 5A, and 5B. FIG. 4 is a diagram illustrating an attachment structure (direct attachment) of the thermistor 3 to the block 4 according to a conventional structure as a comparative example. FIG. 5A is a diagram illustrating a simulation result of temperature changes in the vicinity of the heater 5 of the light detection element 2, the thermistor 3, and the block 4 in the structure of FIG. 4 when the ambient environment temperature is low. FIG. 5B is a diagram illustrating a simulation result of heater output. The heater output is feedback-controlled by PID control based on the temperature detected by the thermistor 3.
In FIG. 5A, since the block 4 is directly heated by the heater, the temperature of the block 4 rises quickly. In addition, since the thermistor 3 is in contact with the block 4, the temperature of the thermistor 3 similarly increases quickly. On the other hand, since the heat from the heater 5 is transmitted to the light detection element 2 with a delay, the temperature rise of the light detection element 2 is relatively slow. At this time, when the temperature of the thermistor 3 reaches the target temperature, the output of the heater 5 decreases, and the rate of temperature rise of the light detection element 2 further decreases. Therefore, it takes a long time to stabilize the temperature of the light detection element 2.

<Thermistor according to Present Embodiment>

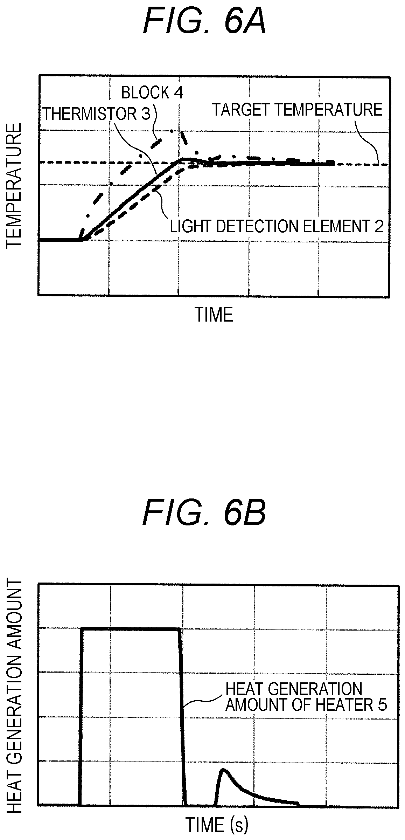

FIG. 6A is a diagram showing a simulation result of temperature changes in the vicinity of the heater 5 of the light detection element 2, the thermistor 3, and the block 4 by the method for installing the thermistor 3 according to the present embodiment (FIGS. 1 to 3). FIG. 6B is a diagram illustrating a simulation result of heater output.
Referring to FIG. 6A, it can be seen that the rate of temperature rise of the thermistor 3 is close to the rate of temperature rise of the light detection element 2, and the thermal time constant $\tau 2$ from the heater 5 to the thermistor 3 is close to the thermal time constant $\tau 1$ from the heater 5 to the light detection element 2. Since heating by the heater 5 is performed until the temperature of the thermistor 3 reaches the vicinity of the target temperature, the temperature of the light detection element 2 rapidly rises and is stabilized early.

<Consideration Result of Quantitative Relationship between Thermistor Support Member 8 and Light Detection Element Support Member 7>

The present inventors and others have considered and verified the quantitative relationship between the thermistor support member 8 and the light detection element support member 7, and have found that there is the following relationship.
It has been found that when the bottom area of the thermistor support member 8 is represented as A1, the height of the thermistor support member 8 is represented as H1, the thermal conductivity of the thermistor support member 8 is represented as k1, the specific heat of the thermistor support member 8 is represented as c1, the density of the thermistor support member 8 is represented as $\rho 1$, the bottom area of the light detection element support member 7 is represented as A2, the height of the light detection element support member 7 is represented as H2, the thermal conductivity of the light detection element support member 7 is represented as k2, the specific heat of the light detection element support member 7 is represented as c2, and the density of the light detection element support member 7 is represented as $\rho$2, and

$$R1 = H1/(k1 \times A1),$$

$$C1 = c1 \times \rho1 \times A1 \times H1,$$

$$R2 = H2/(k2 \times A2),$$

and

$$C2 = c2 \times \rho2 \times A2 \times H2$$

are defined,

the thermistor support member 8 and the light detection element support member 7 satisfy a relationship of $0.8 \times R2 \times C2 \le R1 \times C1 \le 1.2 \times R2 \times C2$. Here, the product of R and C represents a thermal time constant. In addition, it is assumed that the thermal time constants of the block 4 (fixing member) are substantially equal to each other, and the thermal time constants of the thermistor 3 and the light detection element 2 are small and thus can be ignored.

<Relationship between Ambient Environment Temperature and Target Temperature of Thermistor 3>

FIG. 7 is a diagram showing the relationship between the ambient environment temperature detected by the ambient environment temperature sensor 17 and the target temperature of the thermistor 3.

The controller 16 sets the target temperature of the thermistor 3 based on the relationship between the ambient environment temperature and the target temperature of the thermistor 3 stored in advance in the storage device 23. Regarding the relationship between the ambient environment temperature and the target temperature of the thermistor 3, the detection temperature of the thermistor 3 at a time when the heater 5 is stopped and the detection temperature has stabilized at the ambient environment temperature is set as the target temperature. Therefore, the higher the ambient environment temperature, the higher the set target temperature of the thermistor 3. The temperature at a time when the heater 5 is stopped and the ambient environment temperature are not necessarily the same. Since heat is gradually transferred from the light source 10 and the reaction container 13, the temperature in the measurement chamber 1 at a time when the temperature has stabilized is higher than the ambient environment temperature. The temperature at that time is defined as the temperature at a time when the heater 5 is stopped. In this manner, by setting the target temperature of the thermistor 3 to the temperature at a time when the heater 5 is stopped and the temperature has stabilized, the output of the heater 5 can be stopped at the time of stabilization, and the power consumption of the automatic analyzer 100 can be suppressed.

As described above, since the temperature of the light detection element 2 can be stabilized quickly, it is possible to start analysis of the sample with high accuracy in a short time.

(2) Second Embodiment

FIG. 8 is a diagram (diagram corresponding to FIG. 2) illustrating a configuration example of the automatic analyzer 100 according to the second embodiment.

In the present embodiment, the heater 5 can be installed at an intermediate position between the light detection element 2 and the diffraction grating 6, and at a position where the thermal time constant $\tau$1 from the heater 5 to the light detection element 2 and the thermal time constant $\tau$3 from the heater 5 to the diffraction grating 6 are within a predetermined range (for example, $\tau$1 ranges from 80% to 120% of $\tau$3), more preferably at a position where they are substantially equal (in the block 4). The thermistor 3 and the thermistor support member 8 are installed inside the measurement chamber 1 at an intermediate position between the light detection element 2 and the diffraction grating 6. At this time, the material and size of the thermistor support member 8 are adjusted such that the thermal time constant $\tau$2 from the heater 5 to the thermistor 3 and the thermal time constant $\tau$1 from the heater 5 to the light detection element 2 are within a predetermined range (for example, $\tau$1 ranges from 80% to 120% of $\tau$2), more preferably substantially equal. Furthermore, that installation can be at a position where the thermal time constant $\tau$3 from the heater 5 to the diffraction grating 6 is within a predetermined range (for example, τ3 ranges from 80% to 120% of τ2), more preferably at a position where τ2 is substantially equal to the thermal time constant τ3 (in the block 4).

By setting the thermal time constants τ1 to τ3 of the respective elements as described above, the thermal time constant τ1 from the heater 5 to the light detection element 2 and the thermal time constant τ3 from the heater 5 to the diffraction grating 6 can be in the range of 80% to 120% of the thermal time constant τ2 from the heater 5 to the thermistor 3, and more preferably can be made substantially equal.

With such a configuration, the change in the temperature of both the light detection element 2 and the diffraction grating 6 becomes close to the change in the temperature of the thermistor 3, and the temperatures of both the light detection element 2 and the diffraction grating 6 can be quickly stabilized. Therefore, it is possible to start analysis of a sample with high accuracy in a short time.

(3) Others

In the first and second embodiments, the automatic analyzer 100 including the light source 10 has been described as an example, but the present invention can also be applied to an automatic analyzer in which the light source 10 is not provided and the reaction liquid 14 itself of a sample and a reagent is caused to emit light.

In addition, in the first and second embodiments, the biochemical analysis apparatus is a target, but the present invention can also be applied to other analysis apparatuses.

(4) Summary

(i) In the automatic analyzer 100 according to the present embodiment, the thermal time constant τ1 from the heater (heating device) 5 to the light detection element 2 is set in a range of 80% to 120% of the thermal time constant τ2 from the heater 5 to the thermistor (measurement chamber internal temperature sensor) 3. Then, the controller 16 controls the output of the heater 5 such that the temperature detected by the thermistor 3 becomes a predetermined temperature. More specifically, the storage device 23 (which may be provided outside as a configuration different from the controller 16) in the controller 16 stores the relationship (see FIG. 7) between the ambient environment temperature and the detection temperature of the thermistor 3 at a time when the heater 5 is stopped and the detection temperature has stabilized. At this time, based on the detection temperature of the ambient environment temperature sensor, the controller 16 sets the target temperature of the thermistor 3 to a temperature, stored in the storage device 23, at a time when the heater 5 is stopped and the temperature has stabilized, and controls the heater 5 such that the temperature detected by the thermistor 3 becomes the target temperature. This makes it possible to quickly stabilize the temperature of the light detection element 2. Therefore, it is possible to start a highly accurate analysis of the sample in a short time.

In addition, the light detection element 2 is installed on the light detection element support member 7 installed inside the measurement chamber 1. In this manner, it is possible to appropriately adjust the thermal time constant τ1 while avoiding direct heat transfer from the block 4 to the light detection element 2.

(ii) In the present embodiment, the block 4 is used as a member for fixing the light source 10 (light source chamber 11) and a member for fixing the light detection element 2 and the diffraction grating 6 (spectroscopic element). That is, as a fixing member for fixing the light source 10 and a fixing member for fixing the element in the measurement chamber 1, the block 4 formed continuously or the block 4 formed integrally is used so that heat is uniformly transferred. By making the heat transfer manner common, optical adjustment on the light source (light emission) side and the light receiving side (optical element in measurement chamber 1) can be facilitated.

(iii) More specifically, here, the bottom area of the thermistor support member 8 is represented as A1, the height of the thermistor support member 8 is represented as H1, the thermal conductivity of the temperature sensor support member is represented as k1, the specific heat of the thermistor support member 8 is represented as c1, the density of the thermistor support member 8 is represented as ρ1, the bottom area of the light detection element support member 7 is represented as A2, the height of the light detection element support member 7 is represented as H2, the thermal conductivity of the light detection element support member 7 is represented as k2, the specific heat of the light detection element support member 7 is represented as c2, and the density of the light detection element support member 7 is represented as ρ2.

Further,

$$R1 = H1/(k1 \times A1),$$

$$C1 = c1 \times \rho1 \times A1 \times H1,$$

$$R2 = H2/(k2 \times A2),$$

and

$$C2 = c2 \times \rho2 \times A2 \times H2$$

are defined.

At this time, the thermistor support member 8 and the light detection element support member 7 are configured to satisfy a relationship of

$0.8 \times R2 \times C2 \leq R1 \times C1 \leq 1.2 \times R2 \times C2$. In this manner, the thermal time constant $\tau1$ from the heater 5 to the light detection element 2 can be set in a range of 80% to 120% of the thermal time constant $\tau2$ from the heater 5 to the thermistor 3.

(iv) Furthermore, in the present embodiment, each of the thermal time constant $\tau1$ from the heater 5 to the light detection element 2 and the thermal time constant $\tau3$ from the heater 5 to the diffraction grating 6 may be set in a range of 80% to 120% of the thermal time constant $\tau2$ from the heater 5 to the thermistor 3.

(v) In the second embodiment, the thermistor support member 8 is formed of a member having a lower thermal conductivity than the block 4. Further, the heater 5 is installed at a position inside the block 4 and between the block 4 and the light detection element 2 (see FIG. 8). At this time, the controller 16 controls the heater 5 such that the temperature detected by the thermistor 3 becomes a predetermined temperature (the target temperature described above). The thermal conductivity of the block 4 is uniform, and heat is transferred to the entire block 4, but it takes some time for the block 4 to reach a uniform temperature. Therefore, by installing the heater 5 at a position between the light detection element 2 and the diffraction grating 6, these thermal time constants can be set substantially equal, and these temperatures can be stabilized quickly. Therefore, it is possible to start a highly accurate analysis of the sample in a short time.

(vi) Note that light emitted in the reaction container 13 in which a sample and a reagent are mixed and reacted may be dispersed by the diffraction grating 6 without using the light source 10, and the dispersed light may be detected by the light detection element 2. In this case as well, as described above, the thermal time constant $\tau1$ from the heater 5 to the light detection element 2 may be set in a range of 80% to 120% of the thermal time constant $\tau2$ from the heater 5 to the thermistor 3.

(vii) Although specific embodiments have been described in the present disclosure, these are for illustration (understanding of the technology of the present disclosure) rather than limitation in all respects. A person having ordinary knowledge in the technical field can understand that there are many combinations of hardware, software, and firmware suitable for implementing the technology of the present disclosure. In addition, in the above-described embodiment, control lines and information lines considered to be necessary for description are illustrated, and not all control lines and information lines in a product are necessarily illustrated. All the configurations may be connected to each other.

In addition, other implementations of the present disclosure can be made apparent to those skilled in the art from consideration of the present embodiments. The specification and specific examples are exemplary only, and the scope and spirit of the technology of the present disclosure are set forth in the following claims.

Reference Signs List

    1 measurement chamber
    2 light detection element
    3 thermistor
    4 block (metal block)
    5 heater
    6 diffraction grating
    7 light detection element support member
    8 thermistor support member
    9 diffraction grating support member
    10 light source
    11 light source chamber
    12 reaction disk

13 reaction container
14 reaction liquid
15 constant temperature water
16 controller
17 ambient environment temperature sensor
23 storage device
24 thermistor fixture
25 joint portion between thermistor fixing member and block
26 screw hole of thermistor fixing member
27 thermistor wiring
100 automatic analyzer

**Claims**

1. An automatic analyzer comprising:

   a light source that applies light to a reaction container in which a sample and a reagent are mixed and reacted;
   a spectroscopic element that disperses light transmitted through the reaction container;
   a light detection element that detects light dispersed by the spectroscopic element;
   a fixing member that fixes the light detection element and the spectroscopic element;
   a measurement chamber that accommodates the spectroscopic element and the light detection element;
   a heating device installed on the fixing member;
   a controller that controls the heating device;
   a temperature sensor support member installed on the fixing member on an inner side of the measurement chamber adjacent to the light detection element; and
   a measurement chamber internal temperature sensor installed in the temperature sensor support member, wherein
   a thermal time constant from the heating device to the light detection element is in a range of 80% to 120% of a thermal time constant from the heating device to the measurement chamber internal temperature sensor, and
   the controller controls the heating device such that a temperature detected by the measurement chamber internal temperature sensor becomes a predetermined temperature.

2. The automatic analyzer according to claim 1, further comprising:

   an ambient environment temperature sensor that detects an ambient environment temperature; and
   a storage device that stores a relationship between the ambient environment temperature and a detection temperature of the measurement chamber internal temperature sensor at a time when the heating device is stopped and the detection temperature has stabilized, wherein
   the controller sets, based on a temperature detected by the ambient environment temperature sensor, a target temperature of the measurement chamber internal temperature sensor to a temperature at a time when the heating device is stopped and the temperature has stabilized, the temperature being stored in the storage device, and
   the controller controls the heating device such that a temperature detected by the measurement chamber internal temperature sensor becomes the target temperature.

3. The automatic analyzer according to claim 1, wherein
   a fixing member that fixes the light source and a fixing member that fixes the light detection element and the spectroscopic element are continuous and configured such that heat is uniformly transferred.

4. The automatic analyzer according to claim 1, wherein
   a fixing member that fixes the light source and a fixing member that fixes the light detection element and the spectroscopic element are integrally configured.

5. The automatic analyzer according to claim 1, wherein
   the light detection element is installed inside the measurement chamber and installed on a light detection element support member that supports the light detection element.

**6.** The automatic analyzer according to claim 5, wherein

when a bottom area of the temperature sensor support member is represented as A1, a height of the temperature sensor support member is represented as H1, a thermal conductivity of the temperature sensor support member is represented as k1, a specific heat of the temperature sensor support member is represented as c1, a density of the temperature sensor support member is represented as $\rho1$, a bottom area of the light detection element support member is represented as A2, a height of the light detection element support member is represented as H2, a thermal conductivity of the light detection element support member is represented as k2, a specific heat of the light detection element support member is represented as c2, and a density of the light detection element support member is represented as $\rho2$, and

$$R1 = H1/(k1 \times A1),$$

$$C1 = c1 \times \rho1 \times A1 \times H1,$$

$$R2 = H2/(k2 \times A2),$$

and

$$C2 = c2 \times \rho2 \times A2 \times H2$$

are defined,
the temperature sensor support member and the light detection element support member satisfy a relationship of

$$0.8 \times R2 \times C2 \leq R1 \times C1 \leq 1.2 \times R2 \times C2.$$

**7.** An automatic analyzer comprising:

a light source that applies light to a reaction container in which a sample and a reagent are mixed and reacted;
a spectroscopic element that disperses light transmitted through the reaction container;
a light detection element that detects light dispersed by the spectroscopic element;
a fixing member that fixes the light detection element and the spectroscopic element;
a measurement chamber in which the spectroscopic element and the light detection element are installed;
a heating device installed on the fixing member;
a controller that controls the heating device;
a temperature sensor support member installed on the fixing member on an inner side of the measurement chamber adjacent to the light detection element; and
a measurement chamber internal temperature sensor installed in the temperature sensor support member, wherein
a thermal time constant from the heating device to the light detection element and a thermal time constant from the heating device to the spectroscopic element are in a range of 80% to 120% of a thermal time constant from the heating device to the measurement chamber internal temperature sensor.

**8.** An automatic analyzer comprising:

a light source that applies light to a reaction container in which a sample and a reagent are mixed and reacted;
a spectroscopic element that disperses light transmitted through the reaction container;
a light detection element that detects light dispersed by the spectroscopic element;
a fixing member that fixes the light detection element and the spectroscopic element;
a measurement chamber in which the spectroscopic element and the light detection element are installed;
a heating device installed on the fixing member;
a controller that controls the heating device;
a temperature sensor support member installed on the fixing member on an inner side of the measurement chamber adjacent to the light detection element; and

a temperature sensor installed in the temperature sensor support member, wherein
the temperature sensor support member is a member having a lower thermal conductivity than a thermal conductivity of the fixing member,
the heating device is installed at a position between the light detection element and the spectroscopic element, and
the controller controls the heating device such that a temperature detected by the temperature sensor becomes a predetermined temperature.

9. An automatic analyzer comprising:

a spectroscopic element that disperses light emitted in a reaction container in which a sample and a reagent are mixed and reacted;
a light detection element that detects light dispersed by the spectroscopic element;
a fixing member that fixes the light detection element and the spectroscopic element;
a measurement chamber in which the spectroscopic element and the light detection element are installed;
a heating device installed on the fixing member;
a controller that controls the heating device;
a temperature sensor support member installed on the fixing member on an inner side of the measurement chamber adjacent to the light detection element; and
a temperature sensor installed in the temperature sensor support member, wherein
a thermal time constant from the heating device to the light detection element is in a range of 80% to 120% of a thermal time constant from the heating device to the temperature sensor, and
the controller controls the heating device such that a temperature detected by the temperature sensor becomes a predetermined temperature.

# FIG. 1

*FIG. 2*

100

*FIG. 3*

# FIG. 4

## FIG. 5A

TARGET TEMPERATURE

THERMISTOR 3, BLOCK 4

TEMPERATURE

LIGHT DETECTION ELEMENT 2

TIME

## FIG. 5B

HEAT GENERATION AMOUNT

HEAT GENERATION
AMOUNT OF HEATER 5

TIME

## FIG. 6A

## FIG. 6B

# FIG. 7

# FIG. 8

## INTERNATIONAL SEARCH REPORT

| International application No. |
| --- |
| **PCT/JP2024/020779** |

| A. | CLASSIFICATION OF SUBJECT MATTER |
| --- | --- |

*G01N 35/00*(2006.01)i; *G01J 3/02*(2006.01)i; *G01J 3/18*(2006.01)i
FI:   G01N35/00 B; G01J3/02 Z; G01J3/18

According to International Patent Classification (IPC) or to both national classification and IPC

| B. | FIELDS SEARCHED |
| --- | --- |

Minimum documentation searched (classification system followed by classification symbols)

G01N35/00; G01J3/02; G01J3/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-81312 A (HITACHI HIGH-TECH CORPORATION) 27 May 2021 (2021-05-27) paragraphs [0014]-[0062], fig. 1-11 | 1-9 |
| A | WO 2016/059675 A1 (SHIMADZU CORPORATION) 21 April 2016 (2016-04-21) paragraphs [0020]-[0034], fig. 1-3 | 1-9 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/020779**

| Patent document cited in search report | | | Publication date (day/month/year) | Patent family member(s) | | | Publication date (day/month/year) |
|---|---|---|---|---|---|---|---|
| JP | 2021-81312 | A | 27 May 2021 | US paragraphs [0028]-[0076], fig. 1-11 | 2022/0397581 | A1 | |
| | | | | WO paragraphs [0014]-[0062], fig. 1-11 | 2021/100349 | A1 | |
| | | | | EP paragraphs [0014]-[0062], fig. 1-11 | 4063829 | A1 | |
| | | | | CN paragraphs [0033]-[0087], fig. 1-11 | 114651171 | A | |
| WO | 2016/059675 | A1 | 21 April 2016 | CN paragraphs [0043]-[0057], fig. 1-3 | 107076612 | A | |

Form PCT/ISA/210 (patent family annex) (July 2022)

**EP 4 749 291 A1**

**Patent documents cited in the description**

- JP 2014048176 A